# EUROPÄISCHE PATENTSCHRIFT

(11) **EP 1 601 550 B1**
(45) Veröffentlichungstag und Bekanntmachung des Hinweises auf die Patenterteilung: **03.10.2012**
(21) Anmeldenummer: 04803397.1
(22) Anmeldetag: 01.12.2004
(51) Int. Cl.: B60N 2/02, B60N 2/06, B60N 2/44, B60N 2/16, B60N 2/23

(54) **GETRIEBEGEHÄUSE EINES SITZVERSTELLGETRIEBES FÜR EIN KRAFTFAHRZEUG**
DRIVE HOUSING OF A SEAT ADJUSTING DRIVE FOR A MOTOR VEHICLE
CARTER DE PROTECTION D'UN MECANISME DE REGLAGE DE SIEGE POUR UN VEHICULE AUTOMOBILE

(30) Priorität: 08.12.2003 DE 10358586
(43) Veröffentlichungstag der Anmeldung: 07.12.2005
(73) Patentinhaber: KEIPER GmbH & Co. KG, 67657 Kaiserslautern (DE); IMS Gear GmbH, 79871 Eisenbach (DE)
(72) Erfinder: BORBE, Michael, 53359 Rheinbach (DE); WETZIG, Stefan, 58256 Ennepetal (DE); HOFSCHULTE, Wolfram, 79848 Bonndorf (DE); WÖHRLE, Michael, 78078 Niedereschbach (DE)
(74) Vertreter: Klein, Friedrich Jürgen
(86) Internationale Anmeldenummer: PCT/EP2004/013628
(87) Internationale Veröffentlichungsnummer: WO 2005/053997

(56) Entgegenhaltungen:
- EP-A- 0 992 711
- EP-A- 1 026 027
- EP-B- 1 068 093
- WO-A-97/09192
- WO-A-03/074209
- DE-A1- 3 107 455
- DE-A1- 10 250 994
- PATENT ABSTRACTS OF JAPAN Bd. 012, Nr. 031 (M-663), 29. Januar 1988 (1988-01-29) -& JP 62 184939 A (MAZDA MOTOR CORP), 13. August 1987 (1987-08-13)

## Beschreibung

Die Erfindung betrifft ein Getriebegehäuse eines Verstellgetriebes nach dem Oberbegriff von Patentanspruch 1, für eine Sitzverstelleinrichtung eines Kraftfahrzeuges, das zur Aufnahme von Getriebeelementen des Verstellgetriebes vorgesehen ist und mit zumindest zwei Gehäuseteilen versehen ist, wobei die Gehäuseteile zwei Ausnehmungen zur Durchführung einer Spindel des Verstellgetriebes aufweisen, die Gehäuseteile entlang einer Trennlinie als Gehäuse zusammenfügbar sind, hierbei zumindest zwei Gehäuseteile im Bereich der Trennlinie des Gehäuses mit Fügeflächen versehen sind, die zur gegenseitigen Anlage der Gehäuseteile durch einen Fügevorgang der Gehäuseteile vorgesehen sind. Die Erfindung betrifft zudem ein Verstellgetriebe nach dem Oberbegriff von Patentanspruch 9, mit einem solchen Gretriebegehäuse.

Ein solches Getriebegehäuse geht aus der EP 1 068 093 B1 hervor. Das in dieser Schrift gezeigte Getriebegehäuse nimmt ein Getriebe auf, das insbesondere für einen Sitzlängseinsteller vorgesehen ist. Derartige Sitzlängseinsteller dienen dazu, einen Fahrzeugsitz gegenüber einer Bodenstruktur eines Fahrzeuges in einer Längsrichtung zu verstellen. Die Verstellung wird dadurch bewirkt, daß eine Oberschiene, an der sich der Sitz befindet, gegenüber einer Unterschiene längsverschoben wird. Das Getriebegehäuse ist hierbei an der Oberschiene befestigt während die Unterschiene fahrzeugseitig fixiert ist. Mit dem Getriebe wird eine rotative Antriebsbewegung eines Elektromotors in die Längsverstellbewegung transformiert.

Probleme bereitet hierbei der Umstand, daß mit derartigen Getriebegehäusen Getriebekräfte und gegebenenfalls auch Crashbelastungen aufgenommen werden müssen. Um dies bei einer möglichst einfachen konstruktiven Ausgestaltung des Getriebegehäuses zu ermöglichen, müßten die Getriebegehäuse eigentlich relativ massiv ausgelegt sein. Andererseits ist es aber auch erwünscht, die Getriebegehäuse zwischen die Ober- und die Unterschiene zu integrieren. Aus diesem Grund besteht eine Tendenz, die Baugröße der Getriebegehäuse so klein als möglich zu halten. Es besteht somit in Bezug auf die Anforderungen an ein Getriebegehäuse ein Zielkonflikt. Hinsichtlich der Beherrschbarkeit der Getriebekräfte und Crashbeiastungen kommt der Verbindung der Gehäuseteile besondere Relevanz zu. Relativ einfach sind hierbei reine Druckkräfte zu beherrschen, welche die (in der Regel) beiden Gehäuseteile im wesentlichen aneinander pressen. Diese Kräfte können durch Flächenpressung im Bereich von Fügeflächen der Gehäuseteile durch letztere selbst aufgenommen werden. Unter Fügeflächen sind hierbei solche Flächen der Gehäuseteile zu verstehen, die aufgrund des Zusammenfügens der Gehäusteile in Fügerichtung miteinander in Kontakt kommen. Sämtliche anderen im Bereich der Trennlinie des Gehäuses auftretenden Kräfte beanspruchen jedoch vor allem die Verbindung der Gehäuseteile. Aus diesem Grund werden im Stand der Technik entweder vergleichsweise massive oder technisch aufwendige Verbindungen verwendet.

Weitere Getriebegehäse sind aus EP 0 992 711 A2, DE 102 50 994 A1 WO 03/074209 A2, EP 1 026 027 A2 und JP 62-184939 A bekannt.

In der bereits genannten EP 1 068 093 B1 sollen zur Lösung dieses Problems Steckverbindungen vorgesehen sein, wobei durch plastische Verformung oder beispielsweise eine Schweißung der Steckverbindung erst eine dauerhafte und tatsächlich tragende Verbindung zwischen den dort vewendeten Gehäuseplatten erzeugt wird. Hierbei kann jedoch als nachteilig empfunden werden, daß zur Erzeugung der dauerhaften Verbindung kostenintensive Anlagen, wie beispielsweise eine Laserschweißanlage, erforderlich ist. Zudem kann nicht ausgeschlossen werden, daß die verwendete thermische Energie und/oder das mechanische Einwirken auf die Steckverbindungen Getriebeelemente beschädlgt.

Der Erfindung liegt deshalb die Aufgabe zugrunde ein Gehäuse für ein Verstellgetriebe der eingangs genannten Art zu schaffen, das hohe Belastungen aufnehmen kann, dessen Gehäusetelle sicher miteinander fixiert sind und das trotzdem möglichst klein baut. Zudem sollte sich die Lösung soweit als möglich als herstellungs- bzw. montagegünstig erweisen.

Diese Aufgabe wird erfindungsgemäß durch den Gegenstand von Patentanspruch 1 gelöst. Bei diesem ist unter anderen vorgesehen, daß zusätzlich zu den Fügeflächen an den Gehäuseteilen Anlageflächen vorhanden sind, die nicht-parallel zu den Fügeflächen ausgerichtet sind, daß über die Anlageflächen solche Getriebekräfte aufnehmbar sind, deren Wirkrichtung parallel zu zumindest einem Abschnitt der Fügeflächen verläuft und die Gehäuseteile mittels Schraubverbindungen aneinander befestigt sind, wobei die Anlageflächen des einen Gehäuseteils gegenüber den Anlageflächen des anderen Gehäuseteils alleine aufgrund der Schraubverbindungen in ihrer Lage zueinander gehalten werden. Die Aufgabe wird zudem durch ein Verstellgetriebe und einen Längsversteller gemäß den Ansprüchen 9 und 13 gelöst.

Der Erfindung liegt somit unter anderem der Gedanke zugrunde, über Schraubverbindungen einen Teil der im Gehäuse auftretenden Kräfte aufzunehmen. Die Schraubverbindungen sollen vor allem solche Kräfte in einer ersten Raumrichtung aufnehmen, die parallel zur Längsrichtung der vorgesehenen Schrauben verläuft.

Erfindungsgemäß sind jedoch zusätzliche Maßnahmen vorgesehen, mit denen auch Kräfte zumindest zu einem Teil abgetragen werden können, die eine Komponente haben, die quer zur Längsrichtung von zumindest einer der Schraubenverbindungen verläuft. Diese Maßnahme kann durch Anlageflächen der Gehäuseteile realisiert sein. Hierbei sollten sich Anlageflächen der mindestens zwei Gehäuseteile im montierten Zustand des Gehäuses unmittelbar gegenüber liegen und zumindest im wesentlichen parallel zueinander verlaufen. Die zur gegenseitigen Flächenpressung jeweils vorgesehenen Anlageflächen werden alleine durch die Schraubverbindungen in ihrer Position zueinander gehalten.

Die Anlageflächen der Gehäuseteile können bereits im unbelasteten Zustand des Gehäuses einander berühren, so daß über eine Flächenpressung der Anlageflächen Kräfte abgetragen werden können. Abweichend hiervon können die Gehäuseteile aber auch so ausgelegt sein, daß Anlageflächen erst bei einer Belastung der Gehäuseteile miteinander in Kontakt kommen und lastabtragend wirken. Im Unterschied zum Stand der Technik, wie er durch die EP 1 068 093 B1 gegeben ist, sind zur Lastabtragung keine anlagenintensiven nicht-lösbaren Verbindungen zwischen den Gehäuseteilen erforderlich, um mit dem Gehäuse hohe Getriebekräfte aufnehmen zu können. Trotzdem können mit der Erfindung Abzugskräfte erreicht werden, die jenen mit Schweißverbindungen erzielbaren Abzugskräften überlegen sind.

Mit Vorteil kann jedes Gehäuseteil mit mehreren Anlageflächen versehen sein, wobei jeweils zwei Anlageflächen unterschiedlicher Gehäuseteile ein Anlageflächenpaar bilden. Durch Orientierung der mindestens zwei Anlageflächenpaare in unterschiedliche und von der Orientierung der Fügeflächen abweichenden Raumrichtungen können - bei Berücksichtigung der Schraubverbindungen - Kräfte in insgesamt drei unterschiedliche Raumrichtungen aufgenommen werden. Eine besonders günstige erfindungsgemäße Ausgestaltung kann hierbei vorsehen, daß die durch die Anlageflächen und die Schraubverbindungen beherrschbaren Kräfte ein kartesisches Koordinatensystem mit X-, Y- und Z-Achsen bilden. Mit einer solchen erfindungsgemäßen Ausgestaltung ist es möglich, entlang des Verlaufs der Trennlinie des Gehäuses sämtliche als Schubkräfte wirkende Getriebekräfte über die Anlageflächen aufzunehmen.

Um Bauteile wie die Gehäuseteile durch Schraubverbindungen miteinander zu verbinden, ist üblicherweise eine Vorjustage der Bauteile erforderlich, bevor die Schrauben eingedreht werden. Zur Erzielu ng einer solchen Ausrichtung der Bauteile sind sehr genau gearbeitete und aufwendig gestaltete Aufnahmen für die Bauteile erforderlich. Im Zusammenhang mit der vorliegenden Erfindung können derartige Aufnahmen konstruktiv besonders einfach und unaufwendig ausfallen, da die zur Lastabtragung vorgesehenen Anlageflächen auch zumindest einen Teil der Funktion der gegenseitigen Ausrichtung der Gehäuseteile übernehmen können.

Im Zusammenhang mit den Schraubverbindungen hat sich die Verwendung von selbstfurchenden bzw. selbstschneidenden Schrauben als besonders günstig erwiesen. Da sich hiermit das separate Schneiden von Gewinden vermeiden läßt, ergibt sich hieraus eine besonders effiziente Herstellung und Montage des Getriebegehäuses.

Außer als Sitzlängseinsteller läßt sich die Erfindung auch im Zusammenhang mit Sitzhöheneinsteller oder -neigungseinsteller verwenden. Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: eine perspektivische Darstellung eines erfindungsgemäßen Getriebes;
- Fig. 2: das Getriebe von Fig. 1 in einer Explosionsdarstellung;
- Fig. 3a: ein erstes Gehäuseteil in einer perspektivischen Darstellung;
- Fig. 3b: ein zweites Gehäuseteil in einer perspektivischen Darstellung;
- Fig. 4: ein weiteres erfindungsgemäßes Getriebegehäuse in einem montierten Zustand.

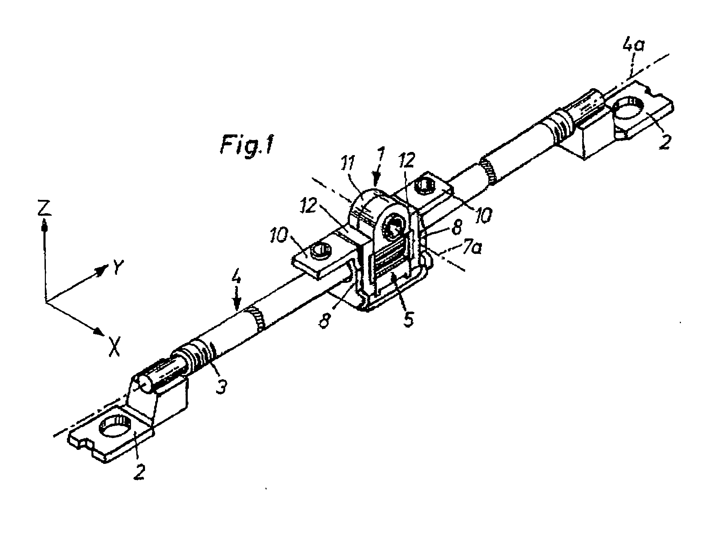

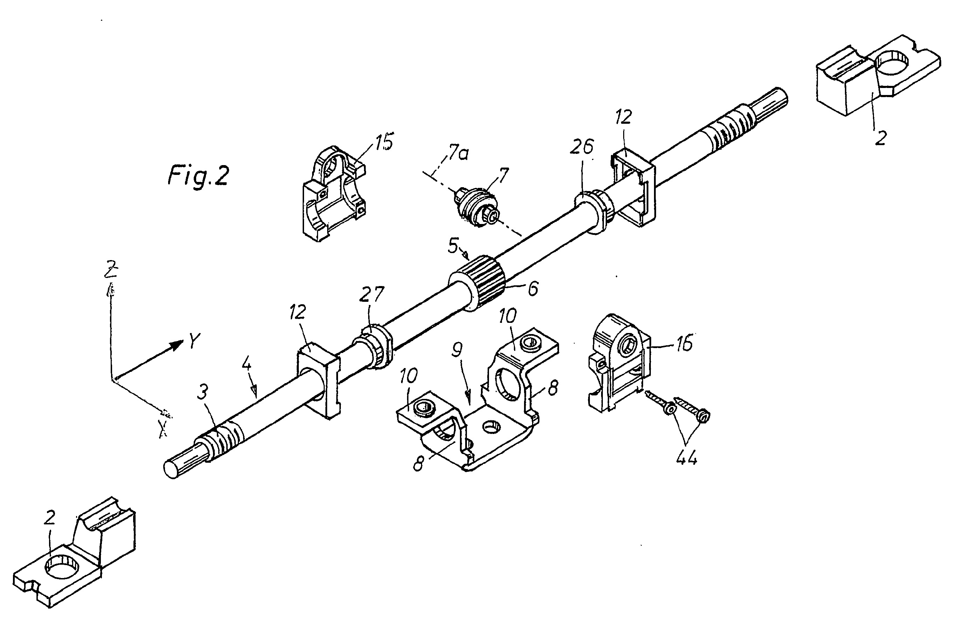

Das in Fig. 1 und Fig. 2 gezeigte erfindungsgemäße Getriebe 1 ist zur Sitzlängsverstellung eines Kraftfahrzeugsitzes vorgesehen. Es befindet sich vorzugsweise zwischen einer Unter- und einer Oberschiene und ist Bestandteil eines Längsverstellers. Hierbei ist die Unterschiene an einer bodenseitigen Struktur eines Kraftfahrzeuges fixiert, während die Oberschiene am Sitz angeordnet und mit diesem relativ zur Unterschiene längsverstellbar ist. Die beiden Schienen können über eine Gleitlagerung oder durch Wälzkörper aneinander gelagert sein. Dieser prinzipielle Aufbau eines Längsversteller ist an sich vorbekannt und in den Figuren nicht näher dargestellt.

Die beiden endseitigen Spindelhalter 2 sind an der Unterschiene befestigt. Eine mit einem Gewinde 3 versehene Spindel 4 ist in den beiden Spindelhaltern 2 rotationsfest gelagert. Auf der Spindel ist eine Spindelmutter 5 angeordnet. Die Spindelmutter weist auf ihrer Mantelfläche eine Schrägverzahnung 6 auf, die mit einer Schnecke 7 gleitet. Eine Längsachse 4a der Spindel 4 und eine Rotationsachse 7a der Schnecke 7 verlaufen hierbei senkrecht zueinander. Die Schnecke 7 wird von einem nicht näher dargestellten elektrischen Antriebsmotor rotativ angetrieben. Anstelle eines Antriebsmotors könnte auch eine manuelle Betätigung vorgesehen sein.

Die Spindel 4 ist durch zwei zueinander parallele Schenkel 8 eines im wesentlichen U-förmigen Haltebügels 9 hindurch gesteckt. An jeden der Schenkel 8 schließt sich ein Befestigungsschenkel 10 an, mittels dem der Haltebügel 9 an der Oberschiene angebracht ist. Die Befestigungsschenkel 10 sind gegenüber ihrem jeweiligen Schenkel 8 um etwa 90° abgebogen.

In dem U-förmigen Haltebügel 9 ist ein Getriebegehäuse 11 aufgenommen, das von zwei Dämpfern 12 eingefaßt wird. Hierbei befindet sich jeweils einer der Dämpfer zwischen dem Getriebegehäuse 11 und einem der Schenkel 8. Durch die Dämpfer 12 wird die Übertragung von möglichen Schwingungen des Getriebes auf die Oberschiene verhindert und damit auch eine störende Geräuschentwicklung unterdrückt.

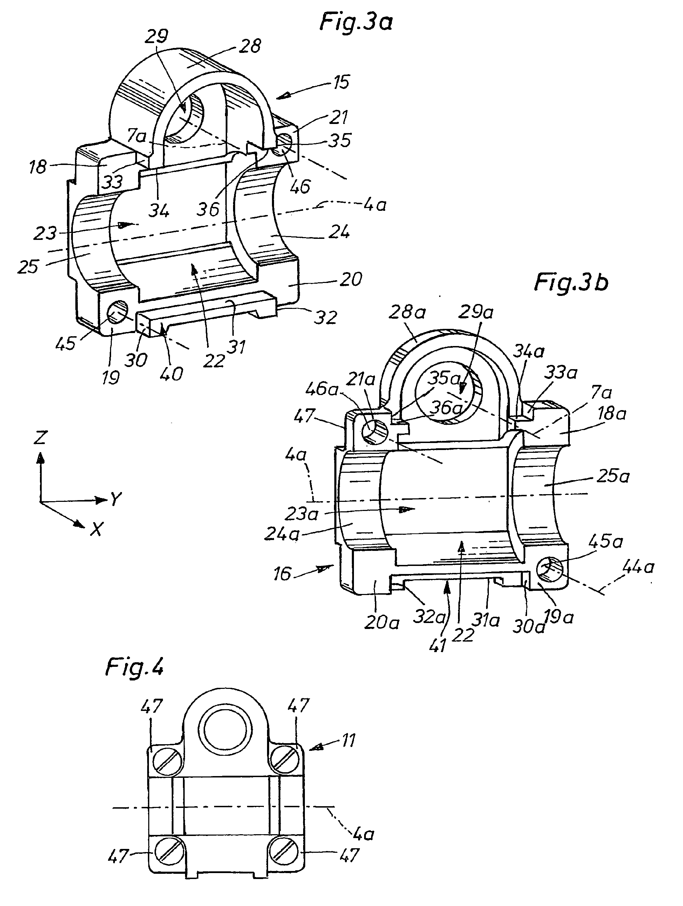

Das Getriebegehäuse 11 besteht im Ausführungsbeispiel aus nur zwei, in den Fig. 3a und 3b näher dargestellten, schalenförmigen Gehäuseteilen 15, 16, nämlich einem Gehäusedeckel und einer Gehäusebasis. Die Längsachse 4a der Spindel 4 liegt in einer Trennebene des Gehäuses, an der die beiden Gehäuseteile mit Fügeflächen 18, 19, 20, 21; 18a, 19a, 20a, 21 a aneinander stoßen. Zudem verläuft die Rotationsachse 7a der Schnecke 7 senkrecht zur Trennebene.

Die beiden Gehäuseteile bilden zwischen sich einen Aufnahmeraum 22 aus, in dem ein Abschnitt der Spindel 4, die Spindelmutter 5, die Schnecke 7 sowie vier Lagerbuchsen angeordnet sind (s. auch Fig. 2). Da der Aufnahmeraum 22 eine geringere Breite hat als der Durchmesser der Spindelmutter 5 hat jedes der Gehäuseteile 15, 16 im Bereich seiner Seitenwände einen Durchbruch 23, 23a. Die Gehäuseteile weisen zudem im Bereich der Trennebene jeweils zwei sich gegenüberliegende halbkreisförmige Einschnitte 24, 25; 24a, 25a auf, die jeweils paarweise eine Ausnehmung bilden, durch die die Spindel 4 hindurchgeführt ist. In jeder der Ausnehmungen ist eine Lagerbuchse 26, 27 angeordnet, in der die Spindelmutter gelagert ist (Fig. 2).

Wie den beiden Darstellungen Fig. 3a und Fig. 3b zu entnehmen ist, ist in oberen halbkreisförmigen Fortsätzen 28, 28a der Gehäuseteile 15, 16 ebenfalls jeweils eine Ausnehmung 29, 29a vorhanden. Diese Ausnehmungen 29, 29a dienen zur Aufnahme der Schnecke, die mittels Lagerbuchsen in den Gehäuseteilen 15, 16 gelagert sein kann.

Die Gehäuseteile 15, 16 werden im montierten Zustand im Bereich der Trennebene mit ihren planen Fügeflächen 18-21; 18a-21a aneinander gedrückt. Im Bereich des Randes des Aufnahmeraums 22 weisen die Gehäuseteile 15, 16 mehrere Anlageflächen auf. Ein erster Typ von Anlageflächen 31, 31 a, 34, 34a, 36, 36a verläuft hierbei parallel zur X-Y-Ebene und damit auch parallel zur Längsachse 4a der Spindel. Ein zweiter Typ von Anlageflächen 30, 30a, 32, 32a, 33, 33a, 35, 35a ist hingegen parallel zur X-Z-Ebene und damit senkrecht zu den Anlageflächen 31, 31 a, 34, 34a, 36, 36a des ersten Typs ausgerichtet. Beide Typen von Anlageflächen sind zudem senkrecht zu den Fügeflächen 18-21; 18a-21a ausgerichtet, die wiederum parallel zur Y-Z-Ebene verlaufen. Jede der Anlageflächen an einem der Gehäuseteile 15, 16 hat ein Pendant an dem jeweils anderen Gehäuseteil 15, 16. Im montierten Zustand der beiden Gehäuseteile werden somit mehrere Paare von Anlageflächen 30, 30a; 31, 31 a; 32, 32a; 33, 33a; 34, 34a; 35, 35a; 36, 36a; der beiden Gehäuseteile gebildet, die jeweils zueinander parallel verlaufen und sich unmittelbar gegenüber liegen.

Wie insbesondere in der Fig. 3a zu erkennen ist, ist ein Teil der Anlageflächen an einem etwa quaderförmigen unteren Fortsatz 40 des Gehäuseteils 15 ausgebildet. Dieser Fortsatz 40 weist die beiden planen Anlageflächen 30, 32 auf, die parallel zur X-Z-Ebene verlaufen sowie die Anlagefläche 31, die parallel zur X-Y-Ebene ausgerichtet ist. Am anderen Gehäuseteil 16 sind in einer Hinterschneidung 41 die hierzu passenden und jeweils parallelen Anlageflächen 30a, 31 a, 32a vorgesehen.

Auf der anderen Seite der Längsachse 4a der Spindel sind im Bereich der halbkreisförmigen Fortsätze 28, 28a an den beiden Gehäuseteilen 15, 16 weitere der jeweils paarweise vorhandene Anlageflächen ausgebildet. Auch hier sind an beiden Gehäuseteilen erste Anlageflächen 33, 35; 33a 35a parallel zur X-Z-Ebene und zweite Anlageflächen 34, 36; 34a, 36a parallel zur X-Y-Ebene ausgerichtet. Ebenso werden auch hier durch die Anlageflächen 33, 33a; 34, 34a; 35, 35a; 36, 36a jeweils Anlageflächenpaare gebildet.

Die Anlageflächen in ihrer Gesamtheit bilden damit eine Art Verschachtelung aus Vorsprüngen und Hinterschneidungen. Durch die Verschachtelung ist zum einen die relative Lage der beiden Gehäuseteile 15, 16 zueinander in Bezug auf ihre gegenseitige Ausrichtung bzw. Lage in der Y-Z-Ebene (Ebene der Fügeflächen) vorbestimmt. Zum anderen werden im montierten Zustand des Gehäuses über die Anlageflächen der Verschachtelung Kräfte bzw. Komponenten von Kräften aufgenommen, die normal zu einer der Anlageflächen gerichtet sind. Dadurch, daß auf beiden Seiten der Längsachse 4a der Spindel Anlageflächenpaare vorhanden sind, ist es auch möglich, auf das Gehäuse wirkende Momente um die Längsachse 4a sowie um die Rotationsachse 7a über die Anlageflächen aufzunehmen.

Um die beiden Gehäuseteile 15, 16 miteinander zu verbinden sind zwei Schraubverbindungen vorgesehen, die sich in Bezug auf den Aufnahmeraum 22 diagonal gegenüber liegen. In anderen Ausführungsformen können eine einzige oder auch drei oder mehr Schraubverbindungen vorhanden sein, wie dies beispielhaft in Fig. 4 gezeigt ist. Unabhängig von der Anzahl der Schraubverbindungen sollten jedoch sämtliche vorgesehenen Schrauben parallel zueinander ausgerichtet sein.

Im Ausführungsbeispiel der Fig. 1, 2, 3a, 3b hat jede der Schraubverbindungen eine selbstfurchende Zylinderkopfschraube 44 der Größe M 2,5 x 8. Solche Zylinderkopfschrauben können im Vergleich zu herkömmlichen Schrauben, insbesondere zu sonst üblichen Senkkopfschrauben, höhere Drehmomente ohne Beschädigung aufnehmen. Die Längsachsen 44a der Schrauben 44 verlaufen parallel zueinander und parallel zur Rotationsachse 7a der Schnecke, d.h. parallel zur X-Richtung und damit quer zur Fahrrichtung eines Kraftfahrzeuges.

Die Schrauben sind jeweils durch eine Durchgangsausnehmung 45a, 46a des Gehäuseteils 16 durchgesteckt und in eine Ausnehmung 45, 46 des anderen Gehäuseteils 15 eingeschraubt. Das Innengewinde bildet sich bei der Montage der Schrauben im Gehäuseteil 15 solbst. Mit nur den beiden Schraubverbindungen lassen sich bereits Abzugskräfte in Richtung der Schraubenlängsachsen von 1500 N und deutlich mehr erzielen.

Damit das Gehäuse samt seinen Schraubverbindungen möglichst kompakt baut sind in den Eckbereichen des Gehäuseteils 16, auf denen die Schraubenköpfe zu liegen kommen, Abflachungen 47 vorgesehen. Damit kann vermieden werden, daß die Schraubenköpfe über die Außenkontur des Gehäuseteils 16 vorstehen. Andererseits wird hierdurch in Bezug auf die X-Z-Ebene eine nahezu symmetrische Gestaltung des Gehäuses erreicht. Dies ermöglicht auf beiden Seiten des Gehäuses identisch gestaltete Dämpfer zu verwenden, was die Werkzeugkosten und damit die Herstellungskosten des Getriebes niedrig hält.

### Bezugszeichenliste

- 1: Getriebe
- 2: Spindelhalter
- 3: Gewinde
- 4: Spindel
- 4a: Längsachse
- 5: Spindelmutter
- 6: Schrägverzahnung
- 7: Schnecke
- 7a: Rotationsachse
- 8: Schenkel
- 9: Haltebügel
- 10: Befestigungsschenkel
- 11: Getriebegehäuse
- 12: Dämpfer
- 15: Gehäuseteil
- 16: Gehäuseteil
- 18: Fügefläche
- 18a: Fügefläche
- 19: Fügefläche
- 19a: Fügefläche
- 20: Fügefläche
- 20a: Fügefläche
- 21: Fügefläche
- 21 a: Fügefläche
- 22: Aufnahmeraum
- 23: Durchbruch
- 23a: Durchbruch
- 24: Einschnitt
- 24a: Einschnitt
- 25: Einschnitt
- 25a: Einschnitt
- 26: Lagerbuchse
- 27: Lagerbuchse
- 28: Fortsatz
- 28a: Fortsatz
- 29: Ausnehmung
- 29a: Ausnehmung
- 30: Anlagefläche
- 30a: Anlagefläche
- 31: Anlagefläche
- 31 a: Anlagefläche
- 32: Anlagefläche
- 32a: Anlagefläche
- 33: Anlagefläche
- 33a: Anlagefläche
- 34: Anlagefläche
- 34a: Anlagefläche
- 35: Anlagefläche
- 35a: Anlagefläche
- 36: Anlagefläche
- 36a: Anlagefläche
- 40: Fortsatz
- 41: Hinterschneidung
- 44: Zylinderkopfschraube
- 44a: Längsachse
- 45: Ausnehmung
- 45a: Durchgangsausnehmung
- 46: Ausnehmung
- 46a: Durchgangsausnehmung
- 47: Abflachung

## Patentansprüche

1. Getriebegehäuse eines Verstellgetriebes für eine Sitzverstelleinrichtung eines Kraftfahrzeuges, das zur Aufnahme von Getriebeelementen des Verstellgetriebes vorgesehen ist und mit zumindest zwei Gehäuseteilen versehen ist, wobei die zusammengefügten Gehäuseteile zwei Ausnehmungen zur Durchführung einer Spindel des Verstellgetriebes freigeben, die Gehäuseteile entlang einer Trennlinie als Gehäuse zusammenfügbar sind, hierbei zumindest zwei Gehäuseteile im Bereich der Trennlinie des Gehäuses mit Fügeflächen versehen sind, die zur gegenseitigen Anlage der Gehäuseteile durch einen Fügevorgang der Gehäuseteile vorgesehen sind
**dadurch gekennzeichnet, daß**
zusätzlich zu den Fügeflächen (18-21; 18a-21a) an den Gehäuseteilen (15, 16) und zusätzlich zu den Ausnehmungen zur Durchführung der Spindel Anlageflächen (30-36; 30a-36a) vorhanden sind, die nicht-parallel zu den Fügeflächen ausgerichtet sind , daß über die Anlageflächen (30-36; 30a-36a) solche Getriebekräfte aufnehmbar sind, deren Wirkrichtung parallel zu zumindest einem Abschnitt der Fügeflächen (18-21; 18a-21a) verläuft und die Gehäuseteile mittels mindestens einer Schraubverbindung aneinander befestigt sind, wobei die Anlageflächen (30-36; 30a-36a) des einen Gehäuseteils (15, 16) gegenüber den Anlageflächen (30-36; 30a-36a) des anderen Gehäuseteils (15, 16) alleine aufgrund der mindestens einen Schraubverbindung in ihrer Lage zueinander gehalten werden, wobei jeweils zwei Anlageflächen unterschiedlicher Gehäuseteile (15, 16) ein Anlageflächenpaar (30-30a, 32-32a, 33-33a, 35-35a, 31-31a, 34-34a, 36-36a) bilden, mindestens zwei Anlageflächenpaare (30-30a, 32-32a, 33-33a, 35-35a, 31-31a, 34-34a, 36-36a) in unterschiedlichen und von der Orientierung der Fügeflächen (18-21, 18a-21a) abweichenden Raumrichtungen angeordnet sind, und die Anlagenflächenpaare (30-30a, 32-32a, 33-33a, 35-35a, 31-31a, 34-34a, 36-36a) zusammen mit den Schraubverbindungen zur Aufnahme von Kräften in drei unterschiedlichen Raumrichtungen vorgesehen sind.

2. Getriebegehäuse nach Anspruch 1, **dadurch gekennzeichnet, daß** die Schraubverbindungen selbstschneidende oder selbstfurchende Schrauben (44) aufweisen.

3. Getriebegehäuse nach einem oder beiden der vorhergehenden Ansprüche 1 oder 2, **dadurch gekennzeichnet, daß** die Gehäuseteile (15, 16) mit höchstens vier, vorzugsweise mit drei und besonders bevorzugt mit nur zwei Schrauben (44) miteinander verbunden sind.

4. Getriebegehäuse nach Anspruch 3, **dadurch gekennzeichnet, daß** sich zwei der Schrauben (44) in Bezug auf einen Aufnahmeraum (22) des Gehäuses zur Aufnahme von Getriebeelementen diagonal gegenüber liegen.

5. Getriebegehäuse nach einem oder mehreren der vorhergehenden Ansprüche, **dadurch gekennzeichnet, daß** es nur zwei Gehäuseteile (15, 16) aufweist.

6. Getriebegehäuse nach einem oder mehreren der vorhergehenden Ansprüche, **gekennzeichnet durch** eine Trennebene im Bereich der umlaufenden Trennlinie des Gehäuses, die **durch** Fügeflachen (18-21; 18a-21a) gebildet wird, wobei mehrere plane Fügeflächen parallel zur Trennebene verlaufen.

7. Getriebegehäuse nach Anspruch 6, **dadurch gekennzeichnet, daß** die Anlageflachen (30-36; 30a-36a) samtliche durch einen Antrieb des Verstellgetriebes in letzterem entstehenden Getriebekräfte aufnehmen, deren Richtung in der Trennebene oder parallel zu dieser verlaufen.

8. Getriebegehäuse nach einem oder mehreren der vorhergehenden Ansprüche, **dadurch gekennzeichnet, daß** Schrauben (44) der Schraubverbindungen im wesentlichen parallel zueinander verlaufen und sich in Bezug auf ein vom Getriebegehäuse gebildeten Aufnahmeraum (22) für das Getriebe diagonal gegenüber liegen.

9. Verstellgetriebe für eine Sitzverstelleinrichtung eines Kraftfahrzeuges,
umfasssend,
ein mehrteiliges Getriebegehäuse, deren Gehäuseteile (15, 16) mittels Befestigungsmittel aneinander befestigt sind,
eine Spindel (4), die durch das Getriebegehäuse hindurchgeführt ist,
eine auf der Spindel (4) angeordnete Spindelmutter(5), die mit einem Außengewinde oder einer Außenverzahnung versehen ist, und die mit einer angetriebenen
Schnecke (7) im Eingriff ist, **gekennzeichnet**
**durch** ein Getriebegehäuse nach einem oder mehreren der Ansprüche 1 bis 8.

10. Verstellgetriebe nach Anspruch 9, **gekennzeichnet durch** eine feststehende und rotationsfeste Spindel (4).

11. Vertellgetriebe nach einem oder beiden der Ansprüche 9 und 10 sowie mit einem Getriebegehäuse nach Anspruch 6, **dadurch gekennzeichnet, daß** die Trennebene des Gehäuses parallel zur Längsachse der Spindel (4) verläuft.

12. Verstellgetriebe nach Anspruch 11, **dadurch gekennzeichnet, daß** die Längsachse in der Trennebene liegt.

13. Längsversteller für einen Kraftfahrzeugsitz, der mit einer zur Anbringung an einer bodenseitigen Struktur eines Kraftfahrzeuges vorgesehenen Unterschiene versehen ist, an der eine Oberschiene gelagert und relativ zur Unterschiene längsverschiebbar ist, wobei eine rotative Antriebsbewegung einer Antriebseinrichtung, wie eines Elektromotors oder dergleichen, mittels eines Verstellgetriebes in eine translatorische Relativbewegung zwischen der Unter- und der Oberschiene transformierbar ist, **gekennzeichnet durch** ein Verstellgetriebe nach einem oder mehreren der Ansprüche 9 bis 12.

14. Längsversteller nach Anspruch 13, **dadurch gekennzeichnet, daß** das Verstellgetriebe in einem Hohlraum zwischen der Ober- und der Unterschiene angeordnet ist.

## Claims

1. A gear housing of an adjusting gear for a seat adjusting device of a motor vehicle, which is provided for receiving gear elements of the adjusting gear and is equipped with at least two housing parts, wherein the joined housing parts expose two recesses for passing through a spindle of the adjusting gear, the housing parts being joinable as a housing along a separating line, at least two housing parts thereby being provided with joining surfaces in the region of the separating line of the housing, which are provided for the mutual contact of the housing parts through a joining operation of the housing parts,
**characterized in that**
in addition to the joining surfaces (18 - 21; 18a - 21a) on the housing parts (15, 16) and in addition to the recesses for passing through the spindle, contact surfaces (30 - 36; 30a - 36a) are present, which are not orientated parallel to the joining surfaces, **in that** via the contact surfaces (30 - 36; 30a - 36a) such gear forces can be absorbed whose operating direction runs parallel to at least one section of the joining surfaces (18 - 21; 18a - 21a) and the housing parts are fastened to each other by means of at least one screw connection, wherein the contact surfaces (30 - 36; 30a - 36a) of the one housing part (15, 16) relative to the contact surfaces (30 - 36; 30a - 36a) of the other housing part (15, 16) are held in their position relative to one another because of the at least one screw connection alone, wherein in each case two contact surfaces of different housing parts (15, 16) form a contact surface pair (30 - 30a, 32 - 32a, 33 - 33a, 35 - 35a, 31 - 31a, 34 - 34a, 36 - 36a), at least two contact surface pairs (30 - 30a, 32 - 32a, 33 - 33a, 35 - 35a, 31 - 31a, 34 - 34a, 36 - 36a) are arranged in directions in space that are different and deviate from the orientation of the joining surfaces (18 - 21, 18a - 21a), and the contact surface pairs (30 - 30a, 32 - 32a, 33 - 33a, 35 - 35a, 31 - 31a, 34 - 34a, 36 - 36a) together with the screw connections are provided for absorbing forces in three different directions in space.

2. The gear housing according to Claim 1, **characterized in that** the screw connections comprise self-cutting or self-tapping screws (44).

3. The gear housing according to any one or both of the preceding Claims 1 or 2, **characterized in that** the housing parts (15, 16) are connected to each other with a maximum of four, preferentially with three and particularly preferably with only two screws (44).

4. The gear housing according to Claim 3, **characterized in that** two of the screws (44) with respect to a receiving space (22) of the housing for receiving gear elements are located diagonally opposite each other.

5. The gear housing according to any one or a plurality of the preceding claims, **characterized in that** it comprises only two housing parts (15, 16).

6. The gear housing according to any one or a plurality of the preceding claims, **characterized by** a separating plane in the region of the circumferential separating line of the housing, which is formed through joining surfaces (18 - 21; 18a - 21a), wherein a plurality of plane joining surfaces run parallel to the separating plane.

7. The gear housing according to Claim 6, **characterized in that** the contact surfaces (30 - 36; 30a - 36a) through a drive of the adjusting gear all absorb gear forces which are generated in said adjusting gear, the direction of which run in the separating plane or parallel to the latter.

8. The gear housing according to any one of a plurality of the preceding claims, **characterized in that** screws (44) of the screw connections run substantially parallel to one another and with respect to a receiving space (22) for the gear formed by the gear housing are located diagonally opposite one another.

9. An adjusting gear for a seat adjusting device of a motor vehicle, comprising a multi-part gear housing, the housing parts (15 - 16) of which are fastened to each other by means of fastening means, a spindle (4) which is passed through the gear housing, a spindle nut (5) arranged on the spindle (4), which is provided with an outer thread or an outer toothing, and which is in engagement with a worm (7), **characterized by** a gear housing according to any one or a plurality of the Claims 1 to 8.

10. The adjusting gear according to Claim 9, **characterized by** a stationary and rotationally fixed spindle (4).

11. The adjusting gear according to any one or both of the Claims 9 and 10 and with a gear housing according to Claim 6, **characterized in that** the separating plane of the housing runs parallel to the longitudinal axis of the spindle (4).

12. The adjusting gear according to Claim 11, **characterized in that** the longitudinal axis lies in the separating plane.

13. A longitudinal adjuster for a motor vehicle seat, which is equipped with a lower rail provided for attachment to a floor-side structure of a motor vehicle, on which an upper rail is mounted and which is longitudinally displaceable relative to the lower rail, wherein a rotatoric drive movement of a driving device, such as an electric motor or the like, can be transformed into a translatoric relative movement between the lower rail and the upper rail by means of an adjusting gear, **characterized by** an adjusting gear according to any one or a plurality of the Claims 9 to 12.

14. The longitudinal adjuster according to Claim 13, **characterized in that** the adjusting gear is arranged in a hollow space between the upper rail and the lower rail.

## Revendications

1. Carter d'engrenage d'un engrenage de réglage pour un système de réglage de siège d'un véhicule, qui est prévu pour le logement d'éléments d'engrenage de l'engrenage de réglage et est doté d'au moins deux parties de carter, les parties de carter assemblées libérant deux évidements pour la réalisation d'une broche de l'engrenage de réglage, les parties de carter pouvant être assemblées le long d'une ligne de séparation sous forme de carter, dans le cas présent au moins deux parties de carter étant dotées dans la zone de la ligne de séparation du carter de surfaces d'assemblage, qui sont prévues pour l'application réciproque des parties de carter par une opération d'assemblage des parties de carter,
**caractérisé en ce que**,
en supplément des surfaces d'assemblage (18-21 ; 18a-21a) sur les parties de carter (15, 16) et en supplément des évidements pour la réalisation de la broche, des surfaces d'application (30-36 ; 30a-36a) sont présentes, qui ne sont pas orientées parallèlement aux surfaces d'assemblage, **en ce que** de telles forces d'engrenage peuvent être absorbées par les surfaces d'application (30-36 ; 30a-36a), forces dont le sens d'effet est agencé parallèlement à au moins une partie des surfaces d'assemblage (18-21 ; 18a-21a) et les parties de carter étant fixées les unes aux autres au moyen d'au moins un assemblage vissé, les surfaces d'application (30-36 ; 30a-36a) d'une partie de carter (15, 16) étant maintenues dans leur position entre elles par rapport aux surfaces d'application (30-36 ; 30a-36a) de l'autre partie de carter (15, 16) uniquement sous l'effet du au moins un assemblage vissé, à chaque fois deux surfaces d'application de différentes parties de carter (15, 16) formant une paire de surfaces d'application (30-30a, 32-32a, 33-33a, 35-35a, 31-31a, 34-34a, 36-36a), au moins deux paires de surfaces d'application (30-30a, 32-32a, 33-33a, 35-35a, 31-31a, 34-34a, 36-36a) étant disposées dans des directions de l'espace différentes et s'écartant de l'orientation des surfaces d'assemblage (18-21 ; 18a-21a), et les paires de surfaces d'application (30-30a, 32-32a, 33-33a, 35-35a, 31-31a, 34-34a, 36-36a) étant prévues en même temps que les assemblages vissés pour l'absorption de forces dans trois directions différentes de l'espace.

2. Carter d'engrenage selon la revendication 1, **caractérisé en ce que** les assemblages vissés présentent des vis (44) auto-taraudeuses ou à auto-rainurage.

3. Carter d'engrenage selon l'une des deux ou les deux revendications précédentes 1 ou 2, **caractérisé en ce que** les parties d'engrenage (15, 16) sont reliées les unes aux autres avec au maximum quatre, de préférence avec trois et avec une préférence particulière avec seulement deux vis (44).

4. Carter d'engrenage selon la revendication 3, **caractérisé en ce que** deux des vis (44) se font face en diagonale par rapport à un espace de logement (22) du carter pour la réception d'éléments d'engrenage.

5. Carter d'engrenage selon l'une ou plusieurs des revendications précédentes, **caractérisé en ce qu'**il présente seulement deux parties d'engrenage (15, 16).

6. Carter d'engrenage selon l'une ou plusieurs des revendications précédentes, **caractérisé par** un plan de séparation dans la zone de la ligne de séparation périphérique du carter, qui est formé par des surfaces d'assemblage (18-21 ; 18a-21a), plusieurs surfaces d'assemblage planes étant agencées parallèlement au plan de séparation.

7. Carter d'engrenage selon la revendication 6, **caractérisé en ce que** les surfaces d'application (30-36 ; 30a-36a) absorbent des forces d'engrenage qui se forment par un entraînement de l'engrenage de réglage dans celui-ci, forces dont la direction se trouve dans le plan de séparation ou est disposée parallèlement à celui-ci.

8. Carter d'engrenage selon l'une ou plusieurs des revendications précédentes, **caractérisé en ce que** des vis (44) des assemblages vissés sont disposées sensiblement parallèlement entre eux et se font face en diagonale par rapport à un espace de logement (22), formé par le carter d'engrenage, pour l'engrenage.

9. Engrenage de réglage pour un système de réglage de siège d'un véhicule, comprenant
un carter d'engrenage en plusieurs parties, dont des parties d'engrenage (15, 16) sont fixées les unes aux autres à l'aide de moyens de fixation,
une broche (4), qui est guidée à travers le carter d'engrenage,
un écrou-broche (5) disposé sur la broche (4), qui est doté d'un filetage externe ou d'une denture externe, et qui est en prise avec une vis sans fin (7) entraînée, **caractérisé**
**par** un carter d'engrenage selon l'une ou plusieurs des revendications 1 à 8.

10. Engrenage de réglage selon la revendication 9, **caractérisé par** une broche (4) fixe et stable en rotation.

11. Engrenage de réglage selon l'une des deux ou les deux revendications 9 et 10 et doté d'un carter d'engrenage selon la revendication 6, **caractérisé en ce que** le plan de séparation du carter est agencé parallèlement à l'axe longitudinal de la broche (4).

12. Engrenage de réglage selon la revendication 11, **caractérisé en ce que** l'axe longitudinal se situe dans le plan de séparation.

13. Dispositif de réglage longitudinal pour un siège de véhicule, qui est doté d'un rail inférieur prévu pour être placé sur une structure côté sol d'un véhicule automobile, rail sur lequel un rail supérieur est monté et peut coulisser dans le sens longitudinal par rapport au rail inférieur, un mouvement d'entraînement rotatif d'un dispositif d'entraînement, tel qu'un moteur électrique ou similaire, pouvant être transformé au moyen d'un engrenage de réglage en un déplacement relatif par translation entre le rail inférieur et le rail supérieur, **caractérisé par** un engrenage de réglage selon l'une ou plusieurs des revendications 9 à 12.

14. Dispositif de réglage longitudinal selon la revendication 13, **caractérisé en ce que** l'engrenage de réglage est disposé dans une cavité entre le rail supérieur et le rail inférieur.
